# DEMANDE DE BREVET EUROPEEN

(11) **EP 1 118 636 A1**
(43) Date de publication de la demande: **25.07.2001**
(21) Numéro de dépôt: 00200231.9
(22) Date de dépôt: 20.01.2000
(51) Int. Cl.: C08K 3/26, C08L 67/04, C08J 5/18

(54) **Compositions à base de polymère de l'caprolactone chargées, procédé pour leur préparation et articles à base de ces compositions**

(71) Demandeur: SOLVAY (Société Anonyme), 1050 Bruxelles (BE)
(72) Inventeur: Manfredi, Dino, 9052 Zwijnaarde (BE); Claeys,Ivan, 3191 Bortmeerbeek (BE)
(74) Mandataire: Dufrasne, Eugène

(57) **Abrégé**

Compositions à base de polymère de l'ε-caprolactone comprenant au moins un polymère de l'ε-caprolactone et du carbonate de calcium. Procédé pour la préparation de ces compositions qui sont utilisés pour la fabrication d'articles, en particulier de films obtenus de préférence par extrusion soufflage ou par extrusion en filière plate.

## Description

L'invention concerne des compositions à base de polymère de l'ε-caprolactone contenant du carbonate de calcium, un procédé pour leur préparation et des articles (films, mousses, flacons, plaques et feuilles) à base de ces compositions.

Les polymères de l'ε-caprolactone ont une bonne biodégradabilité, ce qui les rend attractifs pour diverses applications où cette propriété est requise.

On peut citer parmi celles-ci, les films utilisés pour la réalisation de sacs poubelles, de films pour l'agriculture, de films pour l'emballage, de linceuls ou de couches-culottes; les mousses, les flacons et les produits thermoformés dont par exemple les pots pour jeunes plantes. Ces polymères peuvent également être mis en oeuvre sous forme de plaques.

Pour diminuer le coût de revient des articles produits à partir de ces polymères, on utilise couramment des matières de charge minérales.

L'utilisation de telles matières de charge dans les compositions de polymères de l'ε-caprolactone pose divers problèmes, en particulier pour leurs applications sous forme de films. Ainsi, il est connu que la présence de telles matières de charge dans des compositions à base de ces polymères provoque habituellement, après la mise en oeuvre de celles-ci, notamment sous forme de films, une détérioration des propriétés mécaniques, notamment de leur résistance au choc. Cet inconvénient est particulièrement gênant lorsqu'on met en oeuvre les compositions sous forme de films, notamment à usage de sacs poubelles.

Un autre inconvénient des charges minérales est qu'elles ne peuvent généralement pas être utilisées à concentration élevée dans des compositions à base de polymère de l'ε-caprolactone, sous peine de détérioration de l'aspect des films produits (du fait notamment de la présence de points durs et d'un toucher rugueux, dus à une mauvaise dispersion et à la présence d'agglomérats).

Le Demandeur a à présent découvert que, contrairement aux idées reçues, il était possible d'obtenir des compositions à base de polymère de l'ε-caprolactone contenant comme matière de charge du carbonate de calcium qui, non seulement ne présentent pas ces inconvénients, mais en outre peuvent conduire à une amélioration des propriétés mécaniques des articles fabriqués à base de ces compositions.

On a en effet observé que, de manière surprenante, on pouvait obtenir des articles présentant des propriétés mécaniques non détériorées, voire améliorées, en utilisant, dans les compositions de polymères de l'ε-caprolactone, des particules de carbonate de calcium, même à concentration élevée.

L'invention a tout d'abord pour objet des compositions à base de polymère de l'ε-caprolactone comprenant au moins un polymère de l'ε-caprolactone et du carbonate de calcium.

Les compositions suivant l'invention comportent habituellement au moins 10% en poids de carbonate de calcium. De préférence, les compositions suivant l'invention comportent plus de 25 % en poids de carbonate de calcium. De manière particulièrement préférée, les compositions suivant l'invention comportent au moins 30 % et de manière plus particulièrement préférée, elles comportent au moins 35 % de carbonate de calcium.

Habituellement, les compositions suivant l'invention comportent jusqu'à 80 % en poids de carbonate de calcium, de préférence jusqu'à 50 % en poids de carbonate de calcium.

Par polymères de l'ε-caprolactone, on entend désigner aussi bien les homopolymères de l'ε-caprolactone que les copolymères à teneur prépondérante en ε-caprolactone, par exemple au moins 50 % en poids, avec d'autres monomères, de préférence avec d'autres lactones cycliques. Parmi ces lactones cycliques, on peut citer par exemple la β-propiolactone, la γ-butyrolactone, la δ-valérolactone, la 1,4-dioxane-2-one, la 1,4-dioxépane-2-one, la 1,5-dioxépane-2-one, le glycolide (1,4-dioxane-2,5-dione) et leurs dérivés substitués ainsi que le L-lactide, le D-lactide, le DL-lactide.

Les polymères de l'ε-caprolactone sont de préférence des homopolymères de l'ε-caprolactone.

Les polymères de l'ε-caprolactone peuvent être ramifiés, c'est-à-dire présenter un taux de branchements non nul. De préférence, ils présentent un taux de gel (taux de polymères insolubles dans le chloroforme extraits au moyen d'un soxhlet après 8 heures) inférieur ou égal à 0,5 %, de préférence égal à zéro.

Ils peuvent avoir été obtenus par une réaction en masse fondue dans une extrudeuse en présence d'un générateur de radicaux. Dans ce cas, le générateur de radicaux est mis en oeuvre en une quantité suffisante pour permettre d'obtenir un taux de branchement non nul des polymères de l'ε-caprolactone tout en évitant la formation d'un gel. A titre de générateur de radicaux, on peut utiliser par exemple du 2,5-diméthyl-2,5-di-t-butylperoxyhexane (DHBP).

Par réaction en masse fondue, on entend désigner aux fins de la présente invention, toute réaction en l'absence substantielle de solvant et à une température au moins égale à la température de fusion des polymères de l'ε-caprolactone.

Par extrudeuse, on entend désigner tout dispositif continu comprenant au moins une zone d'alimentation et, à sa sortie, une zone d'évacuation précédée d'une zone de compression, cette dernière forçant la masse fondue à passer au travers de la zone d'évacuation. La zone d'évacuation peut en outre être suivie d'un dispositif de granulation ou d'un dispositif donnant à la matière extrudée une forme profilée, telle qu'un film ou une paraison de flacon. Avantageusement, il sera fait appel à des extrudeuses connues basées sur le travail de deux vis, qu'elles soient co- ou contra-rotatives.

Avantageusement, le carbonate de calcium présente une très bonne aptitude à la dispersion dans les polymères de l'ε-caprolactone, et n'a pas tendance à former des agglomérats dans ces polymères.

Il est important de préciser que les caractéristiques du carbonate de calcium utilisé dans les compositions suivant l'invention qui sont données ci-après sont des caractéristiques mesurées ou décrites pour le carbonate de calcium avant son incorporation dans les compositions suivant l'invention.

Le carbonate de calcium des compositions suivant l'invention est habituellement sous forme de particules, qui présentent de préférence une ou plusieurs des caractéristiques granulométriques mentionnées ci-après. On a obtenu pour du carbonate de calcium de compositions suivant l'invention des courbes granulométriques montrant l'existence de particules de relativement petite taille et une distribution étroite de tailles de particules.

Le diamètre moyen des particules de carbonate de calcium est habituellement inférieur à 5 µm. De manière préférée, il est inférieur à 3 µm. De manière particulièrement préférée, il est inférieur ou égal à 1.5 µm. De manière tout particulièrement préférée, il est inférieur à 1 µm.

Dans le cas de distributions étroites de tailles de particules, le diamètre médian des particules a une valeur très proche de celle du diamètre moyen.

La fraction des particules de carbonate de sodium ayant un diamètre supérieur à 25 µm est habituellement inférieure à 0.04 % en volume, et de préférence nulle.

La fraction des particules de carbonate de calcium ayant un diamètre supérieur à 10 µm est habituellement inférieure à 3 % en volume, de manière préférée inférieure à 1 % en volume et de manière particulièrement préférée inférieure ou égale à 0.5 % en volume.

La fraction des particules de carbonate de calcium ayant un diamètre inférieur à 0.1 µm est en général supérieure à 2 % en volume.

La coupure haute (c'est-à-dire la valeur de diamètre de particule qui est telle qu'au moins 99 % en poids des particules a un diamètre inférieur à cette valeur) est avantageusement inférieure à 12 µm, et de manière particulièrement préférée inférieure à 10 µm. De manière tout particulièrement préférée, elle est inférieure à 8 µm.

Le carbonate de calcium des compositions suivant l'invention peut être d'origine synthétique ou d'origine naturelle.

Lorsqu'il est d'origine synthétique, le carbonate de calcium est habituellement obtenu par la carbonatation d'un lait de chaux ou par la réaction entre le carbonate de sodium et l'hydroxyde de calcium. Parmi les exemples de tels carbonates figure le carbonate de calcium précipité, par exemple le carbonate de calcium commercialisé par SOLVAY sous la marque SOCAL® .

De préférence, le carbonate de calcium des compositions selon l'invention est d'origine naturelle et provient de marbre broyé. Parmi les exemples de tels carbonates de calcium figure le carbonate de calcium FILMLINK® 400 commercialisé par ECC International.

Le carbonate de calcium contient avantageusement moins de 0.5 % d'humidité, et de manière préférée, il contient moins de 0.3 % d'humidité.

Le carbonate de calcium des compositions selon l'invention se présente habituellement sous forme de particules enrobées. L'enrobage des particules de carbonate de calcium représente en général moins de 3 % en poids, de préférence moins de 1.5 % en poids des particules de carbonate de calcium.

L'enrobage comprend habituellement un ou plusieurs acides gras choisis parmi les acides gras saturés et insaturés ayant une chaîne de 8 à 26 atomes de carbone. De bons résultats ont été obtenus avec des acides gras saturés.

Parmi les acides gras saturés, on peut citer par exemple l'acide caprylique (C₈), l'acide caprique (C₁₀), l'acide laurique (C₁₂), l'acide myristique (C₁₄), l'acide palmitique (C₁₆), l'acide stéarique (C₁₈), l'acide arachidique (C₂₀), l'acide béhénique (C₂₂), et l'acide lignocérique (C₂₄).

Parmi les acides gras insaturés, on peut citer par exemple l'acide lauroléique (C₁₂), l'acide myristoléique (C₁₄), l'acide palmitoléique (C₁₆), l'acide oléique (C₁₈), l'acide ricinoléique (C₁₈), l'acide linoléique (C₁₈) et l'acide linolénique (C₁₈).

Lorsque du carbonate de calcium est traité avec un agent comprenant un ou plusieurs acides gras pour obtenir un enrobage des particules, une partie de ces acides gras se lie chimiquement au carbonate de calcium. Dans le cadre de la présente invention, on parlera alors d'acides gras liés aux particules ou chemisorbés.

Une autre partie de ces acides gras, soit n'ayant pas réagi, soit ayant, le cas échéant, réagi avec des ions Ca⁺⁺ présents dans le carbonate de calcium ne se lie pas chimiquement aux dites particules de carbonate de calcium. Dans le cadre de la présente invention, on parlera dans ce cas d'acides gras libres, non liés aux particules ou physisorbés.

Habituellement, le carbonate de calcium dans les compositions selon l'invention comporte des acides gras liés aux particules de carbonate de calcium et des acides gras non liés aux particules de carbonate de calcium.

Dans les compositions suivant l'invention, la proportion des acides gras non liés aux particules de carbonate de calcium est habituellement de moins de 0.5 % en poids par rapport au poids du carbonate de calcium. Elle est de manière préférée de moins de 0.1 %, et de manière particulièrement préférée, elle est de moins de 0.05 % en poids par rapport au poids du carbonate de calcium. De manière plus particulièrement préférée, la proportion des acides gras non liés au carbonate de calcium est de moins de 0.02 % en poids par rapport au poids du carbonate de calcium. Cette concentration est mesurée par extraction au diéthyléther, selon la procédure décrite dans les exemples de la présente demande (Analyses chimiques du carbonate de calcium FILMLINK® 400).

De préférence, le carbonate de calcium des compositions suivant l'invention contient moins de 2.5 % en poids d'impuretés. Ces impuretés peuvent comprendre des carbonates et des oxydes métalliques. Lorsqu'il s'agit d'un carbonate de calcium enrobé, les impuretés de l'enrobage peuvent comprendre par exemple des acides gras autres que ceux mentionnés ci-dessus, des alcools gras et des esters aliphatiques.

Parmi les carbonates de calcium que l'on peut utiliser pour les compositions selon l'invention, on peut citer par exemple le carbonate de calcium commercialisé par SOLVAY sous la marque SOCAL® , par exemple SOCAL® 311 ou SOCAL® 312. Le carbonate de calcium SOCAL® 311 présente un diamètre moyen de 0.75 µm ; 1,6 % en volume des particules ayant un diamètre moyen supérieur à 10 µm, moins de 0.5 % d'humidité et 1.8% en poids d'acides gras en C₁₆ et C₁₈. On peut citer aussi ceux décrits dans la demande internationale WO 99/28050.

Le carbonate de calcium utilisé de manière préférée dans les compositions selon l'invention est choisi parmi ceux décrits dans la demande internationale WO 99/28050.

De manière particulièrement préférée, le carbonate de calcium utilisé est celui commercialisé par ECC International sous la marque FILMLINK® , en particulier sous l'appellation FILMLINK® 400 Powder.

La fiche technique émise par la firme ECC International, datée de juin 1998 est incorporée par référence. Cette fiche comprend deux pages intitulées respectivement "FILMLINK® 400 Additive Technology Product Description and Application Guideline" et "FILMLINK® 400 Powder". Un graphique donnant une distribution typique de la taille des particules de la poudre de carbonate de calcium FILMLINK® 400 figure sur cette seconde page. Pour compléter l'identification, on notera que cette fiche comporte les indications "T1351" et "AOT" dans son coin inférieur droit.

A toutes fins utiles, la plupart des caractéristiques de la poudre de carbonate de calcium enrobé commercialisée par ECC International sous l'appellation FILMLINK® 400 telles qu'elles figurent sur la fiche technique de ce produit à la disposition du Demandeur sont reproduites ci-dessous, en traduction française.

### Description du produit

Poudre FILMLINK® 400
- Diamètre moyen 1.2 µm
- Coupure haute 8 µm
- Blancheur contrôlée
- Enrobage organophile
- Densité - 2.71 g/cm³
- Humidité maximale 0.2 %

### Caractéristiques mesurées à l'expédition

- Brillance Hunter D-25 : 95.0 % minimum (avant traitement de surface)
- Teinte YI-1 : 0.3-1.1 maximum (avant traitement de surface)
- Résidu au tamis de 325 mailles : 0.005 % maximum
- Résidu au tamis de 500 mailles : 0.010 % maximum
- Humidité : 0,20 % maximum
- Taille moyenne des particules : 1.0-1.4 µm
- Enrobage, 0.8-1.2 % en poids(acide stéarique, grade haute pureté, approuvé comme additif alimentaire par la Federal Drug Administration)

### Analyse chimique typique (% en poids), avant traitement de surface

- Humidité : maximum 0.2 %
- Carbonate de calcium CaCO₃ : 97.6 %
- Carbonate de magnésium MgCO₃ : 1.5 %
- Oxyde d'aluminium : Al₂O₃ : 0.18 %
- Oxyde de fer : Fe₂O₃: 0.08 %
- Silice : SiO₂ : 0.20 %
- Oxyde de manganèse : MnO : 0.004 %
- Métaux lourds : moins de 40 ppm

### Caractéristiques physiques typiques

- Taille moyenne des particules (avant traitement de surface): 1.2 microns
- Brillance à sec - Hunter D-25 (avant traitement de surface) : 95
- Poids spécifique apparent
   En vrac 720 kg/m³
   Compacté 100 kg/m³
- Absorption d'huile rub out 16

Les compositions de l'invention peuvent être préparées par tout procédé approprié. De bons résultats sont obtenus si elles sont préparées au moyen du procédé selon l'invention.

L'invention concerne dès lors également un procédé pour la préparation de compositions suivant l'invention selon lequel on fait réagir en masse fondue dans une extrudeuse au moins un polymère de l'ε-caprolactone et du carbonate de calcium. La réaction en masse fondue a de préférence lieu en présence d'un générateur de radicaux. Ce générateur peut être par exemple du 2,5-diméthyl-2,5-di-t-butylperoxyhexane (DHBP).

L'invention a encore pour objet des articles obtenus à partir des compositions suivant l'invention telles que définies ci-dessus.

Ces articles peuvent être obtenus par mise en oeuvre des compositions selon l'invention par extrusion, par thermoformage ou par injection. De préférence, les articles sont obtenus par mise en oeuvre des compositions suivant l'invention par extrusion.

Les articles selon l'invention ont avantageusement une résistance au choc, déterminée suivant la norme ISO 7765-1 A (1988), améliorée par rapport à celle d'articles similaires obtenus par la même technique de mise en oeuvre à partir de compositions de référence identiques, mais dépourvues de carbonate de calcium.

Les conditions de la technique de mise en oeuvre pour les articles selon l'invention sont analogues et aussi proches que possible de celles utilisées pour les articles similaires et sont connues de l'homme du métier.

Il est possible d'obtenir par fabrication directe une telle composition de référence, dépourvue de carbonate de calcium, correspondant à une composition déterminée suivant l'invention.

Il est également possible d'obtenir une telle composition à partir de la composition suivant l'invention considérée, en solubilisant celle-ci par exemple dans du chloroforme, en éliminant totalement, par toute méthode appropriée ne portant pas atteinte au polymère, par exemple par filtrage, les charges minérales présentes et en évaporant le solvant de façon à récupérer le polymère solide pour le mettre ensuite en oeuvre. La mise en oeuvre peut se faire par exemple par pressage ou extrusion.

Les articles suivant l'invention peuvent être choisis parmi les catégories d'articles suivantes : films, mousses, flacons, plaques et feuilles. De préférence, les articles suivant l'invention sont des films, qui peuvent être avantageusement obtenus par extrusion soufflage ou par extrusion en filière plate.

Les exemples qui suivent servent à illustrer l'invention sans pour autant en limiter la portée.

### Carbonate de calcium

Le carbonate de calcium utilisé dans les exemples selon l'invention 2, 3, 4 et 6 est le carbonate de calcium FILMLINK® 400 commercialisée par ECC International.

Des analyses chimiques, des mesures thermogravimétriques, des mesures granulométriques et une mesure de la surface spécifique ont été effectuées sur le carbonate de calcium FILMLINK® 400 avant de procéder à la réalisation des compositions. Ces analyses et les résultats observés sont détaillés ci-après.

### Analyses chimiques du carbonate de calcium FILMLINK® 400

Les acides carboxyliques présents dans le carbonate de calcium FILMLINK® 400 ont été dosés suivant la méthode décrite ci-après.

Du carbonate de calcium FELMLINK® 400 a été soumis à une hydrolyse à l'HCl 12 N pendant 1 heure à reflux. La phase aqueuse, refroidie, a été extraite par du diéthyléther. L'extrait a été lavé par de l'eau distillée jusqu'à fin d'acidité et ensuite filtré sur du sulfate de sodium anhydre. Il a alors été séché en étuve sous vide jusqu'à poids constant.

Les différents composants ont été identifiés par chromatographie sur couche mince et quantifiés en chromatographie en phase gazeuse.

Les mêmes techniques mises en oeuvre sans effectuer d'hydrolyse avant l'étape d'extraction au diéthyléther ont permis de déterminer quelle est la proportion d'acides gras libres, qui ne sont pas liés chimiquement avec le carbonate de calcium.

Il a résulté de ces analyses que la teneur totale en matière organique était de 1 % en poids, et que la composition de la fraction organique comportait majoritairement des acides gras.

La fraction des matières organiques enrobant les particules de carbonate de calcium présentait une composition telle que donnée au tableau 1.

**Tableau 1**

| Composé | Nombre de carbones | % en poids dans l'enrobage |
|---|---|---|
| Acide palmitique | C₁₆ | 47 |
| Acide stéarique | C₁₈ | 44 |
| Acide myristique | C₁₄ | 1.3 |
| Acide heptadécanoïque | C₁₇ | 0.9 |
| Acide pentadécanoïque | C₁₅ | 0.2 |
| Acide eicosanoïque | C₂₀ | 0.1 |
| Acide docosanoïque | C22 | 0.2 |
| Acide cis-oléique+ Acide linoléique | C₁₈, insaturés | 0.05 |

Le solde représentait un peu plus de 6 % en poids. Aucune fraction non identifiée de l'extrait ne représentait plus de 0.2 % en poids de la matière organique. Parmi les impuretés de l'enrobage, on a trouvé des alcools gras et des esters gras aliphatiques.

Par ailleurs, une analyse des acides gras libres a révélé la présence de 0.09 g d'acide palmitique et de 0.05 g d'acide stéarique par kg de produit FILMLINK® 400.

Le total des acides gras non liés aux particules de carbonate de calcium était donc de 0.14 g/kg , soit 0.014 % en poids de produit FILMLINK® 400.

### Mesures thermogravimétriques du carbonate de calcium FILMLINK® 400

Une analyse thermogravimétrique a été effectuée sur des échantillons de 4 grammes de carbonate de calcium FILMLINK® 400, déposés sans tassement sur des tulipes de platine. L'analyseur utilisé était une thermobalance TA1 de Mettler N° 32760, fonctionnant sous un logiciel Anatech. Les tests ont été effectués sous balayage d'air sec.

Lors d'un premier essai, on a effectué un chauffage à 0.5 K/minute de 20 à 200 °C, et lors d'un second essai, on a effectué le chauffage à 1 K/minute de 20 à 400 °C. Les résultats exprimés en perte de poids sont reproduits ci-dessous.

| Essai | Pertes de poids, g/kg | | | | |
|---|---|---|---|---|---|
| | A 100 °C | à 150 °C | à 180 °C | à 200 °C | à 400 °C |
| 1 | 0.2 | 0.4 | 0.9 | 1.2 | - |
| 2 | 0.2 | 0.3 | 0.8 | 1.0 | 10.3 |

### Mesures granulométriques du carbonate de calcium FDLMLINK® 400

On a effectué des mesures de la distribution de la taille des particules de carbonate de calcium FILMLINK® 400 par diffusion laser en voie humide sur un granulomètre laser Coulter LS 230. Les particules ont été utilisées telles que commercialisées, c'est-à-dire à l'état enrobé. Elles ont été mises en présuspension dans de l'isopropanol, puis injectées dans le granulomètre. La mesure a été effectuée pendant 90 secondes. Les valeurs des différents paramètres ont été directement fournies par le logiciel adapté au granulomètre utilisé. Le mesures ont été faites sans application d'ultrasons.

On a observé un diamètre moyen des particules de 1.5 µm.

La fraction des particules ayant un diamètre inférieur à 0.1 µm était de 2.4 % en volume ; la fraction des particules ayant un diamètre supérieur à 10 µm était de 0.5 % en volume, et la fraction de particules ayant un diamètre de plus de 25 µm était de 0.003 % en volume, c'est-à-dire tout à fait négligeable.

On a également observé une coupure haute de 7,4 µm.

### Mesure de la surface spécifique du carbonate de calcium FILMINK® 400

La surface spécifique a été mesurée suivant la méthode BET. La valeur trouvée était de 1,4 m²/g. Fabrication des compositions

L'extrudeuse utilisée a été l'extrudeuse double vis co-rotative WERNER & PFLEIDERER ZSK® 40. Le diamètre des vis est de 40 mm et leur longueur est de 1360 mm. La vitesse de rotation des vis est de 200 rpm (rotations par minute).

L'extrudeuse a été aménagée de manière à ce qu'elle comprenne successivement une zone d'alimentation, une zone de fusion de la matière, une zone d'homogénéisation, une zone de réaction, facultativement une zone d'introduction du carbonate de calcium et d'additifs éventuels et une zone d'évacuation précédée d'une zone de compression. Chacune de ces zones se trouvait à une température bien spécifique.

La zone d'alimentation en polymères de l'ε-caprolactone se trouvait à une température inférieure ou égale à 20 °C.

La zone de fusion de la matière se trouvait à une température de 130 °C. Le DHBP a été introduit dans cette zone en mélange avec le dioxyde de carbone.

La zone d'homogénéisation se trouvait à une température de 130 °C.

La zone de réaction se trouvait à une température de 180°C.

La zone d'introduction du carbonate de calcium et d'additifs éventuels comme par exemple des agents stabilisants, se trouvait à une température de 180 °C.

La zone de compression était à une température de 180 °C.

La zone d'évacuation était à une température de 180 °C.

L'extrudeuse était munie d'une filière à jonc. Le produit a été refroidi dans un bac à eau puis granulé et séché.

### Fabrication de films

Des films ont été réalisés par extrusion soufflage au départ des compositions obtenues sur l'extrudeuse WERNER & PFLEIDERER ZSK® 40, au moyen d'une seconde extrudeuse.

On a utilisé une extrudeuse du type DOLCI 20. Cette extrudeuse monovis a été utilisée pour porter la matière à l'état fondu (75 - 150 °C) avant de la forcer à travers une filière annulaire de 30 mm de diamètre et de 0,75 mm d'entrefer (noyau de 28,5 mm), orientée perpendiculairement à l'axe de l'extrudeuse, de manière à ce que le produit sorte verticalement vers le haut.

On a également utilisé une extrudeuse BATTENFELD 45, ayant une filière annulaire de 80 mm de diamètre et de 0,9 mm d'entrefer.

Le débit de matière a été réglé en changeant la vitesse de rotation de la vis. La paraison tubulaire a alors été gonflée par une pression d'air intérieur et refroidie extérieurement par un flux d'air à température ambiante réparti uniformément autour de la bulle ainsi formée à quelques centimètres au dessus de la filière. Le taux de gonflement (défini comme égal au rapport du diamètre de la bulle sur le diamètre de la filière) a été réglé en ajustant la pression d'air intérieur. La bulle a ensuite été aplatie progressivement par 2 guides, puis pincée entre 2 rouleaux, dont au moins un est caoutchouté et au moins un est entraîné. La paraison tubulaire a donc également été étirée dans le sens axial par les deux rouleaux pinceurs. Le taux d'étirage (défini comme égal au rapport de la vitesse du film à l'enroulement sur la vitesse du film à la filière) a été ajusté en faisant varier la vitesse des rouleaux pinceurs, L'épaisseur finale du film est fonction de l'entrefer de la filière, du taux de gonflement et du taux d'étirage.

### Caractérisation des films obtenus

Des mesures de résistance au choc ont été réalisées sur les films obtenus.

La résistance au choc a été mesurée selon la norme ISO 7765-1 (1988) (méthode A).

### Exemple 1 (comparatif)

Un mélange de 60 % en poids de la poly-ε-caprolactone CAPA® 650 vendue par SOLVAY et 40 % en poids de la poly-ε-caprolactone CAPA® 680 vendue par SOLVAY (dont la masse moléculaire moyenne en nombre, mesurée par chromatographie par perméation de gel est de 55 000 g/mole) a été introduit dans la zone d'alimentation d'une extrudeuse WERNER & PFLEIDERER ZSK® 40 avec un débit de 30 kg/h et s'est déplacé au travers des différentes zones de l'extrudeuse.

Dans la zone de fusion de l'extrudeuse, le 2,5-diméthyl-2,5-di-t-butylperoxyhexane (DHBP) vendu sous la marque LUPERSOL® 101 par PEROXID CHEMIE, en mélange avec le dioxyde de carbone, a été pulvérisé sur la poly-ε-caprolactone au moyen d'un dispositif d'introduction approprié. Le DHBP a été introduit à raison de 1 g par kg de mélange de poly-ε-caprolactone et à raison de 570 µl de DHBP dans 5 ml de dioxyde de carbone par minute.

Un film (N° 1) ne contenant aucune matière de charge a été réalisé par extrusion soufflage sur une extrudeuse DOLCI 20 au départ de la composition selon l'exemple 1 de la manière décrite ci-dessus et avec les conditions reprises ci-dessous.

| N° film | Débit, kg/h | Vitesse, m/min | Epaisseur, µm | Taux d'étirage | Taux de gonflement |
|---|---|---|---|---|---|
| 1 | 2,1 | 1,3 | 58 | 2,6 | 4,2 |

Le film N° 1 a un aspect lisse et se caractérise par une résistance au choc mesurée suivant la norme ISO 7765-1 (méthode A) de 63 g pour une épaisseur de 58 µm.

### Exemple 2 (suivant l'invention)

L 'exemple 1 a été reproduit, en ajoutant toutefois 30 % en poids, par rapport à la composition finale, d'une poudre de carbonate de calcium enrobé commercialisé sous l'appellation FILMLINK® 400 par ECC International dans la zone d'introduction du carbonate de calcium de l'extrudeuse WERNER & PFLEIDERER ZSK® 40 décrite ci-dessus.

Un film (N° 2) a été réalisé au départ de la composition selon l'exemple 2 de la même manière qu'à l'exemple 1 et avec les conditions reprises ci-dessous.

| N° film | Débit, kg/h | Vitesse, m/min | Epaisseur, µm | Taux d'étirage | Taux de gonflement |
|---|---|---|---|---|---|
| 2 | 3.25 | 1.6 | 56 | 2,4 | 4.5 |

Le film N° 2 se caractérise par une résistance au choc mesurée suivant la norme ISO 7765-1 (méthode A) de 74 g pour un film d'un épaisseur de 56 µm. soit, de manière surprenante, une résistance au choc améliorée par rapport à l'exemple 1, qui montrait une valeur de résistance moindre pour une épaisseur supérieure.

Le film a une apparence aussi lisse que le film obtenu suivant l'exemple 1.

### Exemple 3 (suivant l'invention)

L'exemple 1 a été reproduit en ajoutant 40 % en poids, par rapport à la composition finale, de carbonate de calcium enrobé commercialisé sous l'appellation FILMLINK® 400 par ECC International dans la zone d'introduction du carbonate de calcium de l'extrudeuse WERNER & PFLEIDERER ZSK® 40 décrite ci-dessus.

Un film (N° 3) a été réalisé au départ de la composition selon l'exemple 3 de la même manière qu'à l'exemple 1 et avec les conditions reprises ci-dessous.

| N° film | Débit, kg/h | Vitesse, m/min | Epaisseur, µm | Taux d'étirage | Taux de gonflement |
|---|---|---|---|---|---|
| 3 | 3,5 | 2,8 | 28 | 4,5 | 4,5 |

Le film N° 3 se caractérise par une résistance au choc mesurée suivant la norme ISO 7765-1 (méthode A) de 278 g pour un film de seulement 28 µm d'épaisseur. Ainsi, de manière extrêmement surprenante, on a obtenu une résistance au choc de très loin supérieure à celle de l'exemple 1, pour un film pourtant deux fois plus mince. Le film conserve toujours une apparence lisse.

### Exemple 4 (suivant l'invention)

L'exemple 1 a été reproduit en ajoutant 50 % en poids, par rapport à la composition finale, de carbonate de calcium enrobé commercialisé sous l'appellation FILMLINK® 400 par ECC International dans la zone d'introduction du carbonate de calcium de l'extrudeuse WERNER & PFLEIDERER ZSK® 40 décrite ci-dessus.

Un film (N° 4) a été réalisé au départ de la composition selon l'exemple 4 de la même manière qu'à l'exemple 1 et avec les conditions reprises ci-dessous.

| N° film | Débit, kg/h | Vitesse, m/min | Epaisseur, µm | Taux d'étirage | Taux de gonflement |
|---|---|---|---|---|---|
| 4 | 3,4 | 1,75 | 39 | 3,2 | 4,6 |

Le film N° 4 se caractérise par une résistance au choc mesurée suivant la norme ISO 7765-1 (méthode A) de 110 g.

Même à cette très forte concentration en matière de charge, le film conserve une apparence lisse, sans points durs, ce qui constitue un résultat exceptionnel.

### Exemple 5 (comparatif)

Une composition suivant l'exemple 1 a été utilisée pour la fabrication d'un film (N° 5) sur une extrudeuse Battenfeld 45 tel que décrite ci-dessus avec les conditions reprises ci-dessous.

| N° film | Débit, kg/h | Vitesse, m/min | Epaisseur, µm | Taux d'étirage | Taux de gonflement |
|---|---|---|---|---|---|
| 5 | 20 | 8 | 28 | 5.4 | 4 |

Le film N° 5 se caractérise par une résistance au choc inférieure à 40 g. En effet, il casse à chaque impact du projectile le plus léger disponible de masse égale à 40 g.

### Exemple 6 (suivant l'invention)

Une composition suivant l'exemple 2, contenant 30 % en poids, par rapport à la composition finale, d'une poudre de carbonate de calcium enrobé commercialisé sous l'appellation FILMLINK® 400 par ECC International, a été utilisée pour la fabrication d'un film sur une extrudeuse Battenfeld 45 tel que décrite ci-dessus.

Un film (N° 6) a été réalisé au départ de cette composition avec les conditions reprises ci-dessous.

| N° film | Débit, kg/h | Vitesse, m/min | Epaisseur, µm | Taux d'étirage | Taux de gonflement |
|---|---|---|---|---|---|
| 6 | 18,4 | 6 | 34 | 5.5 | 4 |

Le film N° 6 se caractérise par une résistance au choc mesurée suivant la norme ISO 7765.1 de 167 g soit une valeur très supérieure à celle obtenue avec le film produit à l'exemple 5, qui a une épaisseur similaire. Il présente un aspect lisse.

Lors des tests de résistance au choc effectués sur les films obtenus selon l'invention, on constate que ceux-ci ne cassent pas de façon fragile avant la rupture. Le choc du projectile est amorti et fait peu de bruit. De plus, les films selon l'invention blanchissent aux alentours de la zone d'impact, ce qui est une indication d'un allongement non négligeable avant la rupture éventuelle.

## Revendications

1. Compositions à base de polymère de l'ε-caprolactone comprenant au moins un polymère de l'ε- caprolactone et du carbonate de calcium.

2. Compositions suivant la revendication 1, caractérisées en ce qu'elles comportent plus de 25 % en poids de carbonate de calcium.

3. Compositions suivant l'une quelconque des revendication précédentes, caractérisées en ce que le diamètre moyen des particules de carbonate de calcium est inférieur à 5 µm.

4. Compositions suivant l'une quelconque des revendications précédentes, caractérisées en ce que la fraction des particules de carbonate de calcium ayant un diamètre supérieur à 10 µm est inférieure à 3 % en volume.

5. Compositions suivant l'une quelconque des revendications précédentes, caractérisées en ce que les particules de carbonate de calcium présentent une coupure haute inférieure à 12 µm.

6. Compositions suivant la revendication 5, caractérisées en ce que le carbonate de calcium est d'origine naturelle et provient de marbre broyé.

7. Compositions suivant l'une quelconque des revendications précédentes, caractérisées en ce que le carbonate de calcium contient moins de 0.5 % d'humidité.

8. Compositions suivant l'une quelconque des revendications précédentes, caractérisées en ce que le carbonate de calcium se présente sous forme de particules enrobées.

9. Compositions suivant la revendication 8, caractérisées en ce que l'enrobage représente moins de 3 % en poids des particules de carbonate de calcium.

10. Compositions suivant l'une quelconque des revendications 8 et 9, caractérisées en ce que l'enrobage comprend un ou plusieurs acides gras choisis parmi les acides gras saturés et insaturés ayant une chaîne de 8 à 26 atomes de carbone.

11. Compositions suivant la revendication 10, caractérisées en ce que le carbonate de calcium comporte des acides gras liés aux particules de carbonate de calcium et des acides gras non liés aux particules de carbonate de calcium.

12. Compositions suivant la revendication 11, caractérisées en ce que la proportion d'acides gras non liés aux particules de carbonate de calcium est de moins de 0.5 % en poids par rapport au poids de carbonate de calcium.

13. Procédé pour la préparation de compositions suivant l'une quelconque des revendications précédentes, caractérisé en ce qu'on fait réagir en masse fondue dans une extrudeuse au moins un polymère de l'ε-caprolactone et du carbonate de calcium.

14. Procédé suivant la revendication 13, caractérisé en ce que la réaction en masse fondue est effectuée en présence d'un générateur de radicaux.

15. Articles obtenus à partir des compositions suivant l'une quelconque des revendications 1 à 12.

16. Articles suivant la revendication 15, obtenus par mise en oeuvre par extrusion des compositions suivant l'une quelconque des revendications 1 à 12.

17. Articles suivant la revendication 16, caractérisés en ce qu'ils ont une résistance au choc, déterminée suivant la norme ISO 7765-1 A (1988), améliorée par rapport à celle d'articles similaires obtenus par la même technique de mise en oeuvre à partir de compositions de référence identiques, mais dépourvues de carbonate de calcium.

18. Articles suivant l'une quelconque des revendications 15 à 17, caractérisés en ce qu'ils sont choisis parmi les catégories d'articles suivantes : films, mousses, flacons, plaques et feuilles.

19. Articles suivant la revendication 18, caractérisés en ce qu'ils sont des films.

20. Films suivant la revendication 19, caractérisé en ce qu'ils sont obtenus par extrusion soufflage ou par extrusion en filière plate.
